(19) Europäisches Patentamt
European Patent Office
Office européen des brevets

(11) **EP 2 161 856 B1**

(12) **EUROPEAN PATENT SPECIFICATION**

(45) Date of publication and mention
of the grant of the patent:
**10.10.2012  Bulletin 2012/41**

(21) Application number: **07855920.0**

(22) Date of filing: **29.12.2007**

(51) Int Cl.:
***H04B 7/26*** (2006.01)   ***H04L 5/00*** (2006.01)

(86) International application number:
**PCT/CN2007/003920**

(87) International publication number:
**WO 2008/151494 (18.12.2008 Gazette 2008/51)**

(54) **A METHOD FOR TRANSMITTING MULTI-WIRELESS-SCHEMES IQ DATA BETWEEN A BASIC BAND AND A RADIO FREQUENCY**

VERFAHREN ZUM SENDEN VON MEHRFACH-DRAHTLOS-SCHEMA-IQ-DATEN ZWISCHEN EINEM GRUNDBAND UND EINER HOCHFREQUENZ

PROCÉDÉ POUR TRANSMETTRE DES DONNÉES IQ À MULTIPLES SCHÉMAS SANS FIL ENTRE UNE BANDE DE BASE ET UNE FRÉQUENCE RADIO

(84) Designated Contracting States:
**AT BE BG CH CY CZ DE DK EE ES FI FR GB GR HU IE IS IT LI LT LU LV MC MT NL PL PT RO SE SI SK TR**

(30) Priority:  **15.06.2007  CN 200710126190**

(43) Date of publication of application:
**10.03.2010  Bulletin 2010/10**

(60) Divisional application:
**12174254.8**

(73) Proprietor: **ZTE Corporation
Shenzhen, Guangdong 518057 (CN)**

(72) Inventors:
• **ZHAO, Zhiyong
Guangdong 518057 (CN)**
• **GUO, Feng
Guangdong 518057 (CN)**
• **ZONG, Baiqing
Guangdong 518057 (CN)**

(74) Representative: **Bokinge, Ole
Awapatent AB
Junkersgatan 1
582 35 Linköping (SE)**

(56) References cited:
**EP-A1- 1 742 494      CN-A- 1 859 661
US-A1- 2002 080 448     US-B1- 6 598 200**

• **ANONYMOUS: "Common Public Radio Interface (CPRI); Interface Specification", CPRI SPECIFICATION V3.0, , no. v3.0 20 October 2006 (2006-10-20), pages 1-89, XP002632189, Retrieved from the Internet: URL:http: //www.cpri.info/downloads/CPRI_v_ 3_0_2006-10-20.pdf [retrieved on 2011-04-11]**

**Description**

Technical Field

The present invention relates to the field of wireless communication, and more particularly, to a method for mixedly transmitting in-phase and quadrature (IQ) data of Global System for Mobile communication (GSM) / Enhanced Data Rate for GSM Evolution (EDGE) and IQ data of Universal Mobile Telecommunications System (UMTS) / Time Division-Synchronous Code Division Multiple Access (TDSCDMA) between a baseband unit and a remote radio unit.

Technical Background

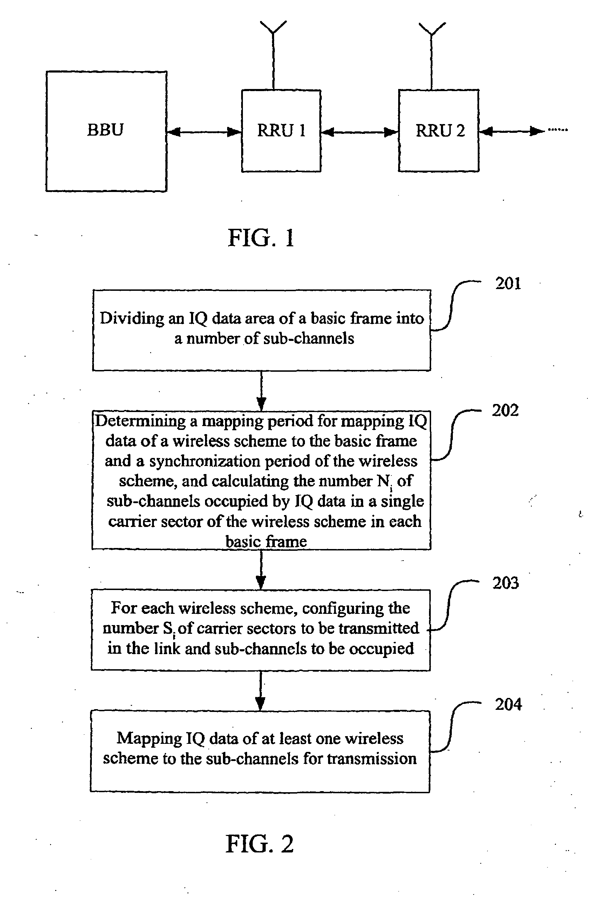

With the development of mobile communication, a wireless network architecture evolves continuously forward accordingly, and the wireless network architecture primarily characterized by separation of a baseband unit from a remote radio unit attracts industries' more and more attention. Such base station architecture separates a baseband unit (BBU) from a remote radio unit (RRU) and connects them by optical fibers or cables, such that networking is very flexible. The architecture of the BBU and RRU can allow more manufacturers for devices and modules to engage in manufacture of base stations, thereby decreasing costs of the base stations.
In a topology structure commonly used in the networking of a BBU and RRU, a plurality of RRUs are connected to the BBU via a chain network or a tree network composed of optical fibers or cables. The BBU achieves the communication with the plurality of RRUs via such network to implement the control and management of the RRUs. The BBU sends multi-channel IQ data to the plurality of RRUs and receives IQ data from the plurality of RRUs. A network topology of the BBU and RRUs is shown in Fig. 1.
In an interface between a BBU and RRU, in general, the physical layer uses a high-speed time division multiplexing (TDM) link, then a frame format is constructed on the physical link, and the BBU and RRU implement synchronization and transmitting and receiving of IQ data by the frame format and a clock of the physical link. For example, a basic frame (BF) of data transmitted between the BBU and RRU is divided into a control word channel and an IQ data channel; the control word channel is used for synchronization, signaling transmission between the BBU and RRU and management control of the link layer, and the IQ data channel is used for transmitting the IQ data between the BBU and RRU, with a fixed basic frame rate. A data area of one basic frame is divided into a number of sub-channels used to transmit IQ data in different carrier sectors, respectively. There exists a one-to-one correspondence between the IQ data in the carrier sectors and the sub-channels, and the IQ data can be placed into the sub-channels according to certain mapping relationship. A larger frame composed of a plurality of basic frames is referred to as a wireless frame or synchronization frame, the time length of which is consistent with a synchronization period of a wireless port in such wireless scheme. Synchronization information is transmitted in a control word in a frame head to implement synchronization between the BBU and RRU.
With such method, high utilization ratio of transmission bandwidth and high reliability are achieved, because both data and synchronization information are extracted from a frame format. But a disadvantage of this method is that the frame format and synchronization mode only correspond to certain wireless scheme, so IQ data of other wireless schemes can not be transmitted and IQ data of various wireless schemes can not be transmitted simultaneously. In actual application, especially in the case of combination of 2G and 3G, however, there are more and more requirements for transmitting IQ data of various wireless schemes in the same link.
At present, the related information is disclosed, for example:

The document ANONYMOUS:"Common Public Radio Interface (CPRI); Interface Specification" discloses the CPRI related parts of the basic radio base station system architecture and defines the mapping of the function onto the different subsystems. Furthermore, the reference configurations and the basic nomenclature are defined.

EP 1 742 494 A1 discloses a method and system of signal transmission between a host BTS and Remote Radio Unit(s), in which, the transmission channel between the host BTS and the RRU(s) communities using wideband transmission links or a network. The method comprises the steps of: performing the transmission over the transmission over the transmission channel using SDH/OTN; and forming a digital wireless signal data stream and an in-band control signaling stream transmitted over the transmission channel into GFP frame which is further mapped to a STM-N/OTM-n frame, thereby multiplexing the digital wireless signal data stream and the in-band control signaling stream to realize SDH/OTN-based transmission.

Summary of the Invention

A technical problem to be solved by the present invention is to provide a method for transmitting IQ data of a plurality of wireless schemes between a baseband unit and a remote radio unit such that IQ data of the wireless schemes mismatching with a basic frame structure can be transmitted between the baseband unit and the remote radio unit.

Another technical problem to be solved by the present invention is to provide a method for transmitting IQ data of a plurality of wireless schemes between a baseband unit and a remote radio unit, such that the IQ data of two or more of the plurality of wireless schemes mismatching or matching with a basic frame structure can be transmitted simultaneously between the baseband unit and the remote radio unit.

In order to solve the technical problems described above, the present invention provides a method for transmitting IQ data of a plurality of wireless schemes between a baseband unit and a remote radio unit, comprising steps of:

(1) dividing an IQ data area of a basic frame evenly into $M$ sub-channels, a size of each sub-channel being $L$ and a total capacity of the IQ data area of the basic frame being $Q$, $Q=M \times L$;

(2) using a least common multiple period of a period of the basic frame and a period of a wireless scheme as a mapping period, the mapping period being $n$ times of the period of the basic frame and $m$ times of the period of the wireless scheme, wherein $m$ and $n$ are positive integers; and using a common multiple period of the period of the wireless scheme and a synchronization period of the basic frame as a synchronization period of the wireless scheme;

(3) calculating the number $N_i$ of sub-channels occupied by IQ data in a single carrier sector of the wireless scheme in each basic frame;

the amount of IQ data contained in a period of the wireless scheme being $W$, and $N_i$ being a result of rounding up a quotient obtained by dividing a total amount of IQ data contained in $m$ periods of the wireless scheme by a product of $n$ periods of the basic frame and the size $L$ of a sub-channel;

wherein $i$ represents the $i^{th}$ wireless scheme to be transmitted, $i \geq 1$;

(4) for each of the plurality of wireless schemes, configuring the number $S_i$ of carrier sectors to be transmitted in a link and the sub-channels to be occupied, a sum of products of the number of the sub-channels occupied and the number $S_i$ of the carrier sectors for each of the plurality of wireless schemes transmitted in the basic frame being no greater than the total number $M$ of the sub-channels contained in the basic frame; and

(5) mapping IQ data of at least one of the plurality of wireless schemes to the sub-channels for transmission.

Further, the method may have the following characteristics: in the step (1), the size of each of the sub-channels is 16 bits; and

if a rate of the transmission between the baseband unit and the remote radio unit is 614.4Mbps, the number $M$ of the sub-channels is 7;

if the rate of the transmission between the baseband unit and the remote radio unit is 1228.8Mbps, the number $M$ of the sub-channels is 15; and

if the rate of the transmission between the baseband unit and the remote radio unit is 2457.6Mbps, the number $M$ of the sub-channels is 30.

Further, the method may have the following characteristics: in the step (2), a least common multiple period of the period of the basic frame and the period of the wireless scheme is used as the mapping period; the synchronization period of the basic frame is 10ms, and for the wireless scheme of GSM/EDGE, the period of the wireless scheme is a period of a burst, and the mapping period is 7.5ms; a least common multiple period of a period of TDMA and the synchronization period of the basic frame is used as the synchronization period of the wireless scheme, which is 60ms.

Further, the method may have the following characteristics: in the step (3),

if the wireless scheme is GSM/EDGE, IQ data in each single carrier sector corresponds to one sub-channel in a basic frame;

if the wireless scheme is UMTS, IQ data in each single carrier sector corresponds to two sub-channels in a basic frame; and

if the wireless scheme is TDSCDMA, IQ data in each single carrier sector corresponds to two sub-channels in three basic frames.

Further, the method may have the following characteristics: in the step (5), if the wireless scheme is GSM/EDGE, mapping IQ data of the wireless scheme to the sub-channels comprises steps of:

(5.1) writing IQ data of GSM/EDGE into the sub-channels, and writing at least one sub-channel of GSM/EDGE into the basic frame, each sub-channel corresponding to a basic frame;

(5.2) combining a number of basic frames generated into segments, IQ data in each segment being IQ data in a burst of GSM/EDGE; and

(5.3) combining every 13 segments generated into a mapping period and every 8 mapping periods into a synchronization period, and sending or receiving frame data of a plurality of synchronization periods generated via an interface between the baseband unit and the remote radio unit with a synchronization clock of 60ms of the data.

Further, the method may have the following characteristics: the segment comprises two types: segment A and segment B; the segment A contains 2215 basic frames, and the segment B contains 2216 basic frames.

Further, the method may have the following characteristics: in each mapping period, an arrangement of the segment A and segment B is AABABABAABABABAAB.

Further, the method may have the following characteristics: the segment comprises functional area blocks of a flag block, a frame number block, a GSM/EDGE IQ block, an expanded IQ block and an unused block; the flag block contains 4 basic frames, the frame number block contains 2 basic frames, the GSM/EDGE IQ block contains 2184 basic frames, and the unused block contains 4 or 3 basic frames.

Further, the method may have the following characteristics: in the GSM/EDGE IQ block, every 14 basic frames as a group transmit data of one symbol, and in the 14 basic frames, the first 8 basic frames transmit 128 bit IQ data of one symbol, and the remaining 6 basic frames are unused; and GSM/EDGE IQ block contains totally 2184 basic frames, which transmit 156 symbols in one burst.

Further, the method may have the following characteristics: 2 basic frames in the expanded IQ block are used to transmit the remaining 0.25 symbol in the burst of GSM/EDGE.

Moreover, the method may further comprise:

writing a clock label of 60ms into the flag block of the first segment in a synchronization period.

Moreover, the method may further comprise:

in the step (5.1), when writing at least one sub-channel of GSM/EDGE into the basic frame, further writing IQ data of at least one channel of UMTS into the basic frame and/or writing IQ data of at least one chip of TDSCDMA into the basic frame.

The present invention allows IQ data of a wireless scheme mismatching with a basic frame structure to be transmitted between a baseband unit and a remote radio unit and IQ data of two or more wireless schemes to be transmitted simultaneously between the baseband unit and the remote radio unit, which is particularly suitable for simultaneous transmission of IQ data of GSM/EDGE and UMTS/TDSCDMA.

Brief Description of the Drawings

Fig. 1 is a network topology of a BBU and RRUs;

Fig. 2 is a flow chart in accordance with an embodiment of the present invention;

Fig. 3 is a schematic diagram of a divided IQ data area of a basic frame in accordance with an embodiment of the present invention;

Fig. 4 is a schematic diagram of a basic frame structure (1228.8bmps) of an interface between a baseband unit and a remote radio unit;

Fig. 5 is a schematic diagram of an IQ data area of a basic frame evenly divided into a plurality of sub-channels in accordance with an embodiment of the present invention;

Fig. 6 is a schematic diagram of a mapping relationship between IQ data of GSM/EDGE and a basic frame in accordance with an embodiment of the present invention;

Fig. 7 is a schematic diagram of a mapping relationship between a segment and multi-channel IQ data of GSM/EDGE in accordance with an embodiment of the present invention;

Fig. 8 is a diagram illustrating the distribution of IQ data of downstream CH0 symbol in 8 basic frames in accordance with an embodiment of the present invention;

Fig. 9 is a diagram illustrating the distribution of IQ data of upstream CH0 symbol in 8 basic frames in accordance with an embodiment of the present invention;

Fig. 10 is a diagram illustrating the multiplexing of 9-channel IQ data of GSM/EDGE and 3-channel IQ data of UMTS in a basic frame in accordance with an embodiment of the present invention;

Fig. 11 is a diagram illustrating the multiplexing of 9-channel IQ data of GSM/EDGE and 9-channel IQ data of TDSCDMA in 3 basic frames in accordance with an embodiment of the present invention; and

Fig. 12 is a diagram illustrating the multiplexing of 3-channel IQ data of GSM/EDGE, 3-channel IQ data of UMTS and 9-channel IQ data of TDSCDMA in 3 basic frames in accordance with an embodiment of the present invention.

Preferred Embodiments of the Invention

A method for transmitting IQ signal by a frame format adapts to requirements of a certain wireless scheme, so IQ data of the wireless scheme can be mapped directly to sub-channels of an IQ data area of a basic frame. IQ data of other wireless schemes is required to be mapped to the basic frame to implement mixed transmission of IQ data of two or more wireless schemes. In order to facilitate the description, in the present invention, a wireless scheme matching with a basic frame structure is referred to as a basic wireless scheme, and a wireless scheme mismatching with a basic frame structure is referred to as a mapping wireless scheme.

The present invention can implement the mapping of IQ data of the mapping wireless scheme to a basic frame format. And through a configuration of mixed transmission of IQ data of two or more wireless schemes, the present invention can implement mixed transmission of IQ data of a plurality of wireless schemes including the basic wireless scheme, which is particularly suitable for simultaneous transmission of IQ data of GSM/EDGE and UMTS/TDSCDMA.

The present invention will be described in detail below in conjunction with the accompanying drawings and specific embodiments

As shown in Fig. 2, the embodiment of the present invention comprises following steps.

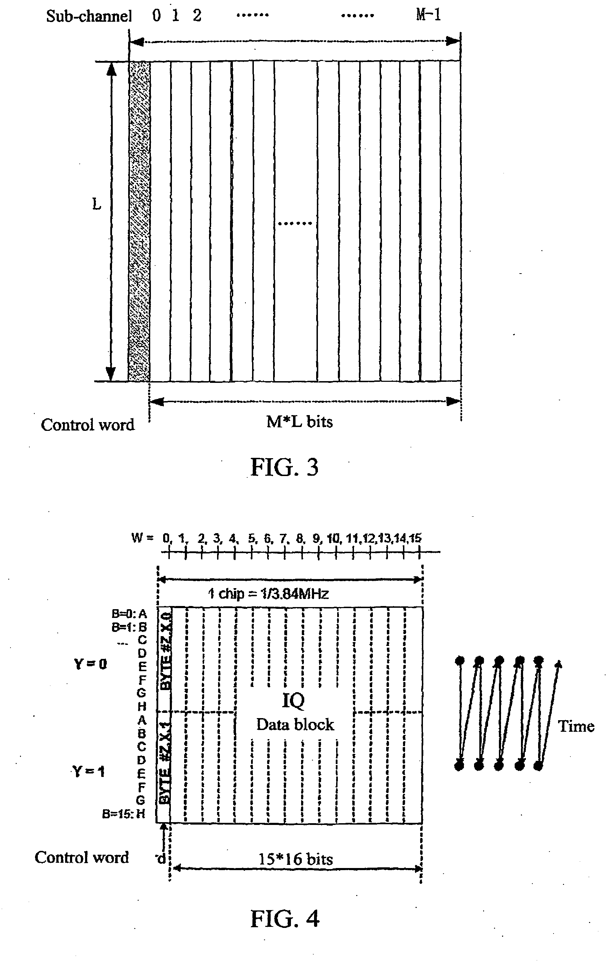

Step 201: an IQ data area of a basic frame is divided evenly into a number of sub-channels with serial numbers 0, 1, ..., $M$-1. As shown in Fig. 3, assuming that the size of a sub-channel is $L$ and total capacity of the IQ data area of the basic frame is $Q$, then $Q=M \times L$.

Step 202: a synchronization period (SYN period) of a wireless scheme and a mapping period for mapping IQ data of the wireless scheme to the basic frame are determined, and the number $N_i$ of sub-channels occupied by IQ data in a single carrier sector of the wireless scheme in each basic frame is calculated, where $i$ represents the $i^{th}$ wireless scheme to be transmitted, $i \geq 1$. When $i = 1$, IQ data of only one wireless scheme is transmitted; and when $i > 1$, IQ data of mixed wireless schemes is transmitted.

Specifically, the step 202 further comprises:

(a) using a common multiple period of a period of the basic frame and a period of a wireless scheme as the mapping period, which equals $n$ times of the period of the basic frame and $m$ times of the period of the wireless scheme, where $m$ and $n$ are positive integers, and using a common multiple period of the period of the wireless scheme and a synchronization period of the basic frame as a synchronization period of the wireless scheme;

(b) determining a value of $N_i$ in the mapping period; assuming that the amount of IQ data contained in a period of the wireless scheme is $W$, $N_i$ is a result of rounding up a quotient obtained by dividing a total amount of IQ data contained in $m$ periods of the wireless scheme by a product of $n$ periods of the basic frame and the size $L$ of a sub-frame:

$$N_i = \left\lceil \frac{(W \times m)}{(n \times L)} \right\rceil$$

Step 203: the number $S_i$ of carrier sectors to be transmitted in the link and the sub-channels to be occupied are configured for each wireless scheme, wherein a sum of products of the number of the occupied sub-channels and the number $S_i$ of the carrier sectors for each wireless schemes transmitted in the basic frame is no greater than the total number $M$ of the sub-frames contained in the basic frame, i.e., $S_i$ satisfies the following formula:

$$\sum_{1}^{i} N_i \times S_i \leq M \ .$$

Step 204: IQ data of at least one wireless scheme is mapped to the sub-channels for transmission, so that mixed transmission of IQ data of a plurality of wireless schemes is implemented.

In order to better illustrate the present invention, a frame format of an interface between a baseband unit and a remote radio unit and a data format of digital IQ signal of UMTS/GSM/EDGE are presented.

A basic frame structure is defined by the interface between the baseband unit and the remote radio unit, as shown in Fig. 4. It can be seen from the figure that W represents the number of words in the basic frame and has a value range of 0 to 15, where a word of W = 0 is a control word and the remaining 15 words are IQ data area (IQ data block); Y represents the number of bytes contained in a word in the basic frame, and a value of Y corresponds to a transmission rate at the interface between the baseband unit and the remote radio unit, that is, the larger the value of Y is, the higher the transmission rate at the interface between the baseband unit and the remote radio unit is. The size of the IQ data area in a basic frame is $15 \times (y +1) \times 8$ bits, where y is a maximum value of Y.

A period of each basic frame is 1/3.840MHz, and a synchronization period of the basic frame is 10ms and contains 38400 basic frames. Synchronization information of the basic frame is transmitted in every 10ms.

IQ data of UMTS is shown as below:

Table 1

| Required definition | Required value |
| --- | --- |
| Upstream minimal IQ sampling width | 4 bits |
| Upstream maximum IQ sampling width | 10 bits |
| Downstream minimal IQ sampling width | 8 bits |
| Downstream maximum IQ sampling width | 20 bits |

The IQ data rate of UMTS is 3.84Mchipps and is consistent with the basic frame rate, and the amount of IQ data at a sampling point is less than capacity of the IQ data block in a basic frame, so multi-channel IQ signals of UTMS can be transmitted in the basic frame. If the number of multiplexing channels of IQ signals of UMTS is decreased in the basic frame, transmission bandwidth may be reserved for IQ data of GSM/EDGE, so that mixed transmission of IQ data of GSM/EDGE and UMTS can be implemented.

It is specified in GSM specifications that the symbol rate of each burst is 270.833kbps, the number of symbols transmitted is 156.25 and the time length is 15/26ms, i.e., about 577us; 8 bursts constitute one TDMA frame, the time length of which is about 4.615ms. In the present invention, IQ data of GSM/EDGE refers to digital IQ signals between a baseband unit and a remote radio unit. The amount of IQ data of the symbol and the data rate is shown in the following table.

Table 2

| Required definition | Required value | Remark |
| --- | --- | --- |
| Upstream IQ sampling width | 16 bits | |
| Upstream IQ sampling rate | 2 | |
| Upstream IQ diversity | 2 | |
| Upstream symbol IQ data amount | 128 bits | |
| Upstream IQ data rate | About 34.66 Mbps | Each burst is calculated as 156.25 symbols |
| Upstream IQ data rate | 34.6112 Mbps | Each burst is calculated as 156 symbols |
| Downstream IQ sampling width | 16 bits | |
| Downstream IQ sampling rate | 4 | |
| Downstream symbol IQ data amount | 128 bits | |
| Downstream IQ data rate | About 34.66 Mbps | Each burst is calculated as 156.25 symbols |
| Downstream IQ data rate | 34.6112 Mbps | Each burst is calculated as 156 symbols |

A downstream burst is further accompanied with some power control information and phase-locked loop (PLL) information.

Because 148 symbols in each burst are useful information and the remaining 8.25 symbols are protection bits, in order to facilitate transmission, only 156 symbols may be transmitted in each upstream and downstream burst, then both upstream IQ rate and downstream IQ rate are 34.6112Mbps. Upstream data in carriers of GSM/EDGE has contained data of two diversities in one sector, thus, it is processed as one carrier sector herein when it is mapped to a basic frame.

The IQ data rate of GSM/EDGE is much lower than the interface rate of the basic frame so that multiplexing IQ data in multiple carriers of GSM/EDGE can be implemented. In conjunction with properties of IQ data of UMTS, IQ data of GSM/EDGE and IQ data of UMTS can be transmitted mixedly in the basic frame. In addition, TDSCDMA can implement frame formats mapping and IQ data multiplexing at an interface between a baseband unit and a remote radio unit and, and thereby IQ data of GSM/EDGE and UMTS/TESCDMA can be transmitted mixedly at the interface between the baseband unit and the remote radio unit.

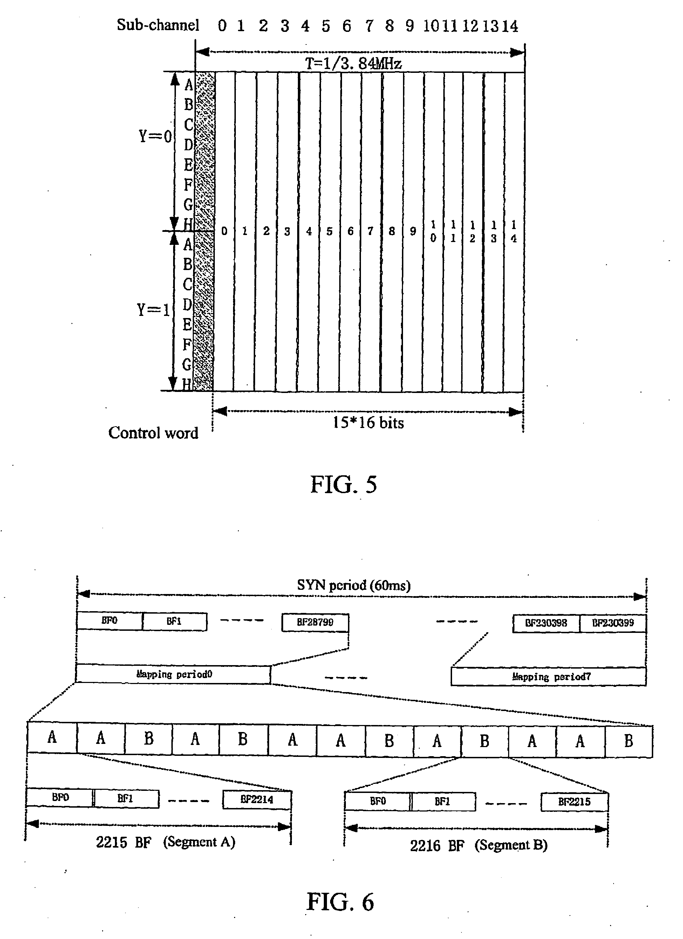

According to the method described herein, an IQ data area of a basic frame is first divided evenly into $(15 \times (y+1) \times 8)/16$ sub-channels with a length of 16 bits each. Take a basic frame with $Y = 0, 1$ as example, there are 15 sub-channels, with serial numbers of 0, 1, ..., 14, in the IQ data area, as shown in Fig. 5.

When a rate of the transmission between the baseband unit and the remote radio units is 614.4Mbps, the number of sub-channels is 7; when a rate of the transmission between the baseband unit and the remote radio unit is 1228.8Mbps, the number of sub-channels is 15; and when a rate of the transmission between the baseband unit and the remote radio unit is 2457.6Mbps, the number of sub-channels is 30.

UMTS conforms to format requirements of the basic frame, there is a corresponding relationship between its IQ data and the sub-channels, and 2 sub-channels is required to be occupied for transmitting IQ data in one carrier sector of UMTS.

The number $N_i$ of sub-channels occupied by IQ data in one carrier sector of GSM/EDGE is determined below.

The period of a wireless scheme described above may comprise several types of periods, such as the minimal frame period (e.g., a burst of GSM), super-frame period consisting of a plurality of minimal frame periods or synchronization periods (e.g., TDMA period). Here, the minimal frame period (burst) is used as the period of the wireless scheme.

According to the method described herein, a common multiple of the period of the wireless scheme of GSM/EDGE and the synchronization period of the basic frame is determined as 60ms (that is, the least common multiple of a TDMA period of GSM/EDGE and the synchronization period of the basic frame), and the synchronization period of GSM/EDGE is 60ms, i.e., when IQ data of GSM/EDGE is transmitted using the basic frame, synchronization information of GSM/EDGE is transmitted in every 60ms. The least common multiple of the period of the wireless scheme of GAM/EDGE and the period of the basic frame is 7.5ms, which is used as a mapping period containing 13 bursts of GSM/EDGE and at the same time containing 28800 periods of the basic frame. The synchronization period of GSM/EDGE is integral multiples (8 multiples) of the mapping period.

The amount of IQ data contained in each burst of GSM/EDGE is $156.25 \times 128=20000$ bits, and the amount of IQ data contained in one mapping period is $13 \times 20000=260000$ bits. According to the calculation in (b) of the step 202, only one sub-channel is required to be occupied for transmitting IQ data in a carrier sector of GSM/EDGE.

In order to facilitate the processing of IQ data by the baseband unit and the remote radio unit and ensure integrity of the basic frame and uniformity of link data, a flexible mapping method may be used according to properties of the wireless scheme. This will be described in detail below.

One synchronization period contains 8 mapping periods, and each mapping period contains 28800 basic frames and is divided into 13 segments, where 8 segments are segments of A-type (segment A) containing 2215 basic frames (BF) and the remaining 5 segments are segments of B-type (segment B) containing 2216 basic frames (BF). An arrangement of the segment A and segment B is AABABAABABAAB, as shown in Fig. 6. Data formats of segment A and segment B keep consistent, except that unused basic frames in the segment B are one more than those in the segment A. Each segment is used for transmitting IQ data of one burst of GSM/EDGE.

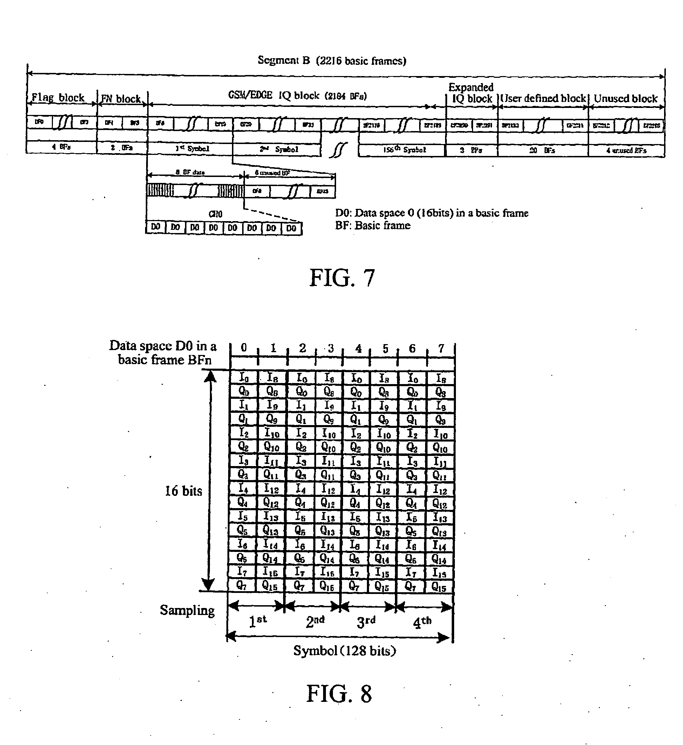

A mapping relationship between segments and multi-channel IQ data of GSM/EDGE is shown in Fig. 7.

One segment contains 2215 or 2216 basic frames. In the embodiment, taking the segment B for example, a mapping relationship between a segment and IQ data of a burst of GSM/EDGE is illustrated. The segment B is divided into several functional areas, where the first 4 basic frames (BF0-BF3) are used as a flag block, the subsequent 2 basic frames (BF4, BF5) are used as a frame number (FN) block, the subsequent 2184 basic frames (BF6-BF2189) are used as a GSM/EDGE IQ block, the subsequent 2 basic frames (BF2190, BF2191) are used as an expanded IQ block, the subsequent 20 basic frames (BF2192-BF2211) are used as a user defined block, and the last 4 basic frames (BF2212-BF2215) are an unused block. The data formats of segment A and segment B are identical, except that unused basic frames in the segment A are one less than those in the segment B.

In the CSM/EDGE IQ block, every 14 basic frames as a group may transmit 1 symbol, where the first 8 basic frames transmit 128 bit IQ data of one symbol, and the remaining 6 basic frames are unused. There are totally 2184 basic frames, which may transmit 156 symbols, in the GSM/EDGE IQ block. The GSM/EDGE IQ block is followed by the expanded IQ block containing 2 basic frames, which may transmit the remaining 0.25 symbol in a burst. Because the last 0.25 symbol in the burst is protection bits, sometimes in order to facilitate transmission, only 156 symbols may be transmitted in each upstream and downstream burst, and in that case, the extended IQ block is unused.

The 128 bits of one symbol is distributed evenly in 8 basic frames, with each basic frame only occupying one sub-channel of 16 bits.

The basic frame may multiplex IQ data in multiple carriers of GSM/EDGE. As shown in Fig. 5, 15 carriers, represented by CH0, CH1, ..., CH14, respectively, are multiplexed in one basic frame, with each carrier only occupying a certain sub-channel (16 bits) in each basic frame of a segment. In other functional areas of the segment, data distribution follows the rule as described above.

The flag block containing 4 basic frames is used for transmitting a head flag of the segment. In a segment where a synchronization period of 60ms begins, the flag block transmits a synchronization flag of the 60ms.

The frame number block containing 2 basic frames is used for transmitting information of a frame number and a timeslot number of GSM/EDGE, and its carrier multiplexing and data format are the same as those of the GSM/EDGE IQ block.

The user defined block containing 20 basic frames is used for transmitting channel associated information, such as downstream power control, phase-locked loop information, etc. If there is no channel associated signaling in upstream, then the area is unused. The carrier multiplexing and data arrangement of the user defined block are the same as those of the GSM/EDGE IQ block.

With the method according to the present invention, mapping and adaptation relationships are established between IQ data of GSM/EDGE and a basic frame, the number $N_i$ of sub-channels occupied by IQ data in a carrier sector of GSM/EDGE in the basic frame is determined, and a method for mapping IQ data to sub-channels is made according to properties of GSM/EDGE. Of course, other mapping methods may be used.

When IQ data of GSM/EDGE and UMTS is transmitted mixedly in a basic frame of a baseband unit (BBU) and a remote radio unit (RRU), the number of carrier sectors of GSM/EDGE and UMTS and the occupied sub-channels in the basic frame may be configured according to the step 203. Then, the BBU and RRU map IQ data of the two schemes to sub-channels in respective manners to implement mixed transmission of IQ data of the two schemes.

IQ data of TDSCDMA may be transmitted in the basic frame in the manner as described above. Chip rate of TDSCDMA is 1.28Mcps, 1/3 of the basic frame rate, that is, the time length of 3 basic frames is the same as that of 1 TDSCDMA chip, thus, a mapping period is equal to 3 periods of the basic frame. In TDSCDMA, an IQ sampling width is typically 16 bits, thus, 2 sub-channels in 3 basic frames are occupied by IQ data in one carrier sector of TDSCDMA. On the other hand, a synchronization period of TDSCDMA, which is 10ms, is the same as a synchronization period of the basic frame, and has an integral multiple relationship with a synchronization period of 60ms of GSM/EDGE. Therefore, IQ data of TDSCDMA may be transmitted in the basic frame, or it may be transmitted simultaneously with IQ data of GSM/EDGE.

The method described herein also applies to simultaneous transmission of IQ data of GSM/EDGE, UMTS and TDSCDMA in the basic frame.

The method according to the present invention will further be described in conjunction with specific application examples.

Application examples 1

Requirements for transmission of IQ data of GSM/EDGE are as follows:

(1) IQ data of GSM/EDGE satisfies the requirements described in Table 2;

(2) in a basic frame, $Y$ = 0, 1;

(3) only 156 symbols are transmitted in a burst of GSM/EDGE; and

(4) 15-channel IQ data of GSM/EDGE is multiplexed.

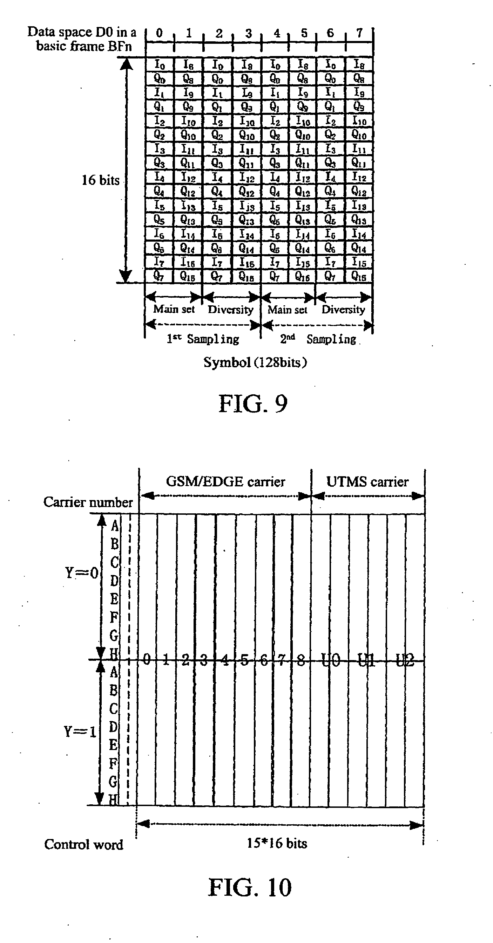

Referring to Fig. 6 and Fig. 7, in upstream and downstream frame formats, the expanded IQ block is unused. In the GSM/EDGE IQ block, because only one sub-channel is occupied by IQ data of GSM/EDGE in a basic frame, data in 15 carriers is multiplexed in the basic frame. As shown in Fig. 5, serial numbers of sub-channels are from 0 to 14. Because the size of a sub-channel is 16 bits, the total size of 15 carriers is 240 bits, which is just equal to the capacity of IQ data in the basic frame. Taking carrier CH0 for example, a mapping relationship between IQ data of a symbol and a basic frame is illustrated. Mappings of downstream and upstream symbol data are shown in Fig. 8 and 9, respectively. Data arrangement of only sub-channel 0 in each basic frame is provided in the figures. With the data mapping described above, 15-channel IQ data of GSM/EDGE may be multiplexed at an interface between a baseband unit and a remote radio unit. Data arrangements of other functional areas of the segment are the same as that of IQ data and will not be repeated here.

Application examples 2

Requirements for simultaneous transmission of IQ data of GSM/EDGE and UMTS are as follows:

(1) upstream and downstream IQ data of GSM/EDGE satisfies the requirements described in Table 2;

(2) in a basic frame, $Y$ = 0, 1;

(3) only 156 symbols are transmitted in a burst of GSM/EDGE;

(4) 1-fold sample with a downstream sampling width of UMTS being 16 bits is used such that a total sample rate is 32 bits/chip; and double over-sampling with a upstream sampling width of UMTS being 8 bits is used such that a total sample rate is 32 bits/chip; and

(5) IQ data of GSM/EDGE and UMTS, i.e., IQ data of 9 carriers of GSM/EDGE and IQ data in 3 carrier sectors of UMTS is transmitted mixedly.

When IQ data of GSM/EDGE and UMTS is transmitted mixedly, the mapping period and synchronization period of IQ data of GSM/EDGE as well as the number of sub-channels occupied by one carrier sector are the same as those described in the above embodiment. 2 sub-channels are occupied by a carrier sector of UMTS in one basic frame. To implement mixed transmission, it is merely needed to divide sub-channels to be occupied by carrier sectors of GSM/EDGE and UMTS in the basic frame according to a configuration. Details of the configuration are shown in Fig. 10, in which the first 9 sub-channels in the basic frame carry 9-channel IQ data of GSM/EDGE, carrier serial numbers being 0 ~ 8, and the subsequent 6 sub-channels, totally 96 bits, may carry data in 3 carrier sectors of UMTS, carrier sector serial numbers being U0 ~ U2. The above configuration for IQ data in the basic frame is sent to a RRU by a BBU via a signaling channel, and the RRU properly parses IQ data of GSM/EDGE and UMTS according to the configuration. The ratio of the number of carrier sectors of GSM/EDGE to the number of carrier sectors of UMTS may change flexibly according to requirements. However, in one basic frame, the total amount of IQ data of the two schemes can not exceed the capacity of the IQ data area of the basic frame, that is, the constraint condition in the step 203 must be satisfied.

Application examples 3

Requirements for simultaneous transmission of IQ data of GSM/EDGE and TDSCDMA are as follows:

(1) upstream and downstream IQ data of GSM/EDGE satisfies the requirements described in Table 2;

(2) in a basic frame, $Y$= 0, 1;

(3) only 156 symbols are transmitted in a burst of GSM/EDGE;

(4) 1-fold sample with upstream and downstream sampling widths of TDSCDMA being 16 bits is used such that a total sample rate is 32 bits/chip; and

(5) IQ data of GSM/EDGE and TDSCDMA, i.e., IQ data in 9 carriers of GSM/EDGE and 9 carrier sectors of TDSCDMA, is transmitted mixedly.

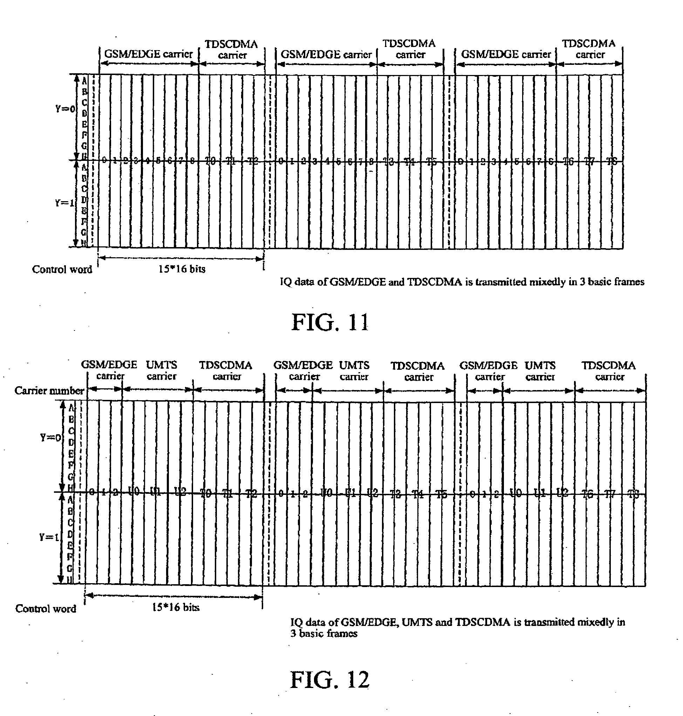

When IQ data of GSM/EDGE and TDSCDMA is transmitted mixedly, a frame format for mapping GSM/EDGE to an interface between a baseband unit and a remote radio unit remains unchanged, and only sub-channels of GSM/EDGE and chip data of TDSCDMA are required to be configured in the basic frame. A detailed configuration is shown in Fig. 11, in which the first 9 sub-channels in the basic frame carry 9-channel IQ data of GSM/EDGE, and the subsequent 6 sub-channels carry data in 3 carrier sectors of TDSCDMA. Because the chip length of TDSCDMA is equal to 3 basic frames, IQ data in 9 carrier sectors with carrier serial numbers T0 ~ T8 may be multiplexed.

Application examples 4

Requirements for simultaneous transmission of IQ data of GSM/EDGE, UMTS and TDSCDMS are as follows:

(1) upstream and downstream IQ data of GSM/EDGE satisfies the requirements described in Table 2;

(2) in a basic frame, $Y = 0, 1$;

(3) only 156 symbols are transmitted in a burst of GSM/EDGE;

(4) 1-fold sample with a downstream sampling width of UMTS being 16 bits is used such that a total sample rate is 32 bits/chip; and double over-sampling with a upstream sampling width of UMTS being 8 bits is used such that a total sample rate is 32 bits/chip;

(5) 1-fold sample with upstream and downstream sampling widths of TDSCDMA being 16 bits is used such that a total sample rate is 32 bits/chip; and

(6) IQ data of GSM/EDGE, UMTS and EDSCDMA, i.e., IQ data in 3 carriers of GSM/EDGE, 3 carrier sectors of UMTS and 9 carrier sectors of TDSCDMA is transmitted mixedly.

When IQ data of GSM/EDGE and UMTS is transmitted mixedly, the mapping period and synchronization period of IQ data of GSM/EDGE and the number of sub-channels occupied by one carrier sector are the same as those described in the above embodiment. 2 sub-channels are occupied by carrier sectors of UMTS in one basic frame. To implement mixed transmission, it is merely needed to divide sub-channels to be occupied by carrier sectors of GSM/EDGE and UMTS in the basic frame according to a configuration. Details of the configuration are shown in Fig. 12, in which the first 3 sub-channels in the basic frame carry 3-channel IQ data of GSM/EDGE, carrier serial numbers being 0 ~ 2, the middle 6 sub-channels carry IQ data in 3 carrier sectors of UMTS, carrier sector serial numbers being U0 ~ U2, and the subsequent 6 sub-channels carry data in 3 carrier sectors of TDSCDMA. Because the chip length of TDSCDMA is equal to 3 basic frames, IQ data in 9 carrier sectors with carrier serial numbers T0 ~ T8 may be multiplexed.

Industrial Applicability

The present invention allows IQ data of a wireless scheme mismatching with a basic frame structure to be transmitted between a baseband unit and a remote radio unit and IQ data of two or more wireless schemes to be transmitted simultaneously between the baseband unit and the remote radio unit, which is particularly suitable for simultaneous transmission of IQ data of GSM/EDGE and UMTS/TDSCDMA.

**Claims**

1.  A method for transmitting IQ data of a plurality of wireless schemes between a baseband unit and a remote radio unit, **characterized in that** the method comprises the steps of:

    (1) dividing an IQ data area of a basic frame evenly into $M$ sub-channels (201), a size of each sub-channel being $L$ and a total capacity of the IQ data area of the basic frame being $Q$, $Q=M{\times}L$;
    (2) using a least common multiple period of a period of the basic frame and a period of a wireless scheme as a mapping period, the mapping period being $n$ times of the period of the basic frame and $m$ times of the period of the wireless scheme, wherein $m$ and $n$ are positive integers; and using a common multiple period of the period of the wireless scheme and a synchronization period of the basic frame as a synchronization period of the wireless scheme;
    (3) calculating the number $N_i$ of sub-channels occupied by IQ data in a single carrier sector of the wireless scheme in each basic frame (202);
    the amount of IQ data contained in a period of the wireless scheme being $W$, and $N_i$ being a result of rounding up a quotient obtained by dividing a total amount of IQ data contained in $m$ periods of the wireless scheme by a product of $n$ periods of the basic frame and the size $L$ of a sub-channel;
    wherein $i$ represents the $i^{th}$ wireless scheme to be transmitted, $i \geq 1$;
    (4) for each of the plurality of wireless schemes, configuring the number $S_i$ of carrier sectors to be transmitted in a link and the sub-channels to be occupied, a sum of products of the number of the sub-channels occupied and the number $S_i$ of the carrier sectors for each of the plurality of wireless schemes transmitted in the basic frame being no greater than the total number $M$ of the sub-channels contained in the basic frame (203); and
    (5) mapping IQ data of at least one of the plurality of wireless schemes to the sub-channels for transmission (204).

**2.** The method according to claim 1, wherein in the step (1) (201), the size of each of the sub-channels is 16 bits; and if a rate of the transmission between the baseband unit and the remote radio unit is 614.4Mbps, the number $M$ of the sub-channels is 7;
if the rate of the transmission between the baseband unit and the remote radio unit is 1228.8Mbps, the number $M$ of the sub-channels is 15; and
if the rate of the transmission between the baseband unit and the remote radio unit is 2457.6Mbps, the number $M$ of the sub-channels is 30.

**3.** The method according to claim 1, wherein in the step (2), a least common multiple period of the period of the basic frame and the period of the wireless scheme is used as the mapping period; the synchronization period of the basic frame is 10ms, and for the wireless scheme of GSM/EDGE, the period of the wireless scheme is a period of a burst, and the mapping period is 7.5ms; a least common multiple period of a period of TDMA and the synchronization period of the basic frame is used as the synchronization period of the wireless scheme, which is 60ms.

**4.** The method according to claim 1, wherein in the step (3) (202),
if the wireless scheme is GSM/EDGE, IQ data in each single carrier sector corresponds to one sub-channel in a basic frame;
if the wireless scheme is UMTS, IQ data in each single carrier sector corresponds to two sub-channels in a basic frame; and
if the wireless scheme is TDSCDMA, IQ data in each single carrier sector corresponds to two sub-channels in three basic frames.

**5.** The method according to claim 3, wherein in the step (5) (204), if the wireless scheme is GSM/EDGE, mapping IQ data of the wireless scheme to the sub-channels comprises steps of:

(5.1) writing IQ data of GSM/EDGE into the sub-channels, and writing at least one sub-channel of GSM/EDGE into the basic frame, each sub-channel corresponding to a basic frame;
(5.2) combining a number of basic frames generated into segments, IQ data in each segment being IQ data in a burst of GSM/EDGE; and
(5.3) combining every 13 segments generated into a mapping period and every 8 mapping periods into a synchronization period, and sending or receiving frame data of a plurality of synchronization periods generated via an interface between the baseband unit and the remote radio unit with a synchronization clock of 60ms of the data.

**6.** The method according to claim 5, wherein the segment comprises two types: segment A and segment B; the segment A contains 2215 basic frames, and the segment B contains 2216 basic frames.

**7.** The method according to claim 6, wherein in each mapping period, an arrangement of the segment A and segment B is AABABAABABAAB.

**8.** The method according to claim 5, wherein the segment comprises functional area blocks of a flag block, a frame number block, a GSM/EDGE IQ block, an expanded IQ block and an unused block; the flag block contains 4 basic frames, the frame number block contains 2 basic frames, the GSM/EDGE IQ block contains 2184 basic frames, and the unused block contains 4 or 3 basic frames.

**9.** The method according to claim 5, further comprising:

in the step (5.1), when writing at least one sub-channel of GSM/EDGE into the basic frame, further writing IQ data of at least one channel of UMTS into the basic frame and/or writing IQ data of at least one chip of TDSCDMA into the basic frame.


**Patentansprüche**

**1.** Verfahren zum Übertragen von IQ-Daten von mehreren drahtlosen Schemata zwischen einer Basisbandeinheit und einer entfernten Funkeinheit, **dadurch gekennzeichnet, dass** das Verfahren die folgenden Schritte umfasst:

(1) gleichmäßiges Aufteilen eines IQ-Datenbereichs eines Grundrahmens in $M$ Unterkanäle (201), wobei eine Größe jedes Unterkanals *L* ist und eine Gesamtkapazität des IQ-Datenbereichs des Grundrahmens *Q* ist, $Q = M \times L$;

(2) Verwenden einer kleinsten gemeinsamen Mehrfachperiode einer Periode des Grundrahmens und einer Periode eines drahtlosen Schemas als eine Abbildungsperiode, wobei die Abbildungsperiode das *n*-fache der Periode des Grundrahmens und das *m*-fache der Periode des drahtlosen Schemas ist, wobei *m* und *n* positive ganze Zahlen sind; und Verwenden einer gemeinsamen Mehrfachperiode der Periode des drahtlosen Schemas und einer Synchronisierungsperiode des Grundrahmens als eine Synchronisierungsperiode des drahtlosen Schemas;

(3) Berechnen der Anzahl $N_i$ von Unterkanälen, die von IQ-Daten belegt werden, in einem einzelnen Trägersektor des drahtlosen Schemas in jedem Grundrahmen (202);

wobei die Menge von IQ-Daten, die in einer Periode des drahtlosen Schemas enthalten ist, *W* ist und $N_i$ ein Ergebnis des Aufrundens eines Quotienten ist, der durch Dividieren einer Gesamtmenge von IQ-Daten, die in *m* Perioden des drahtlosen Schemas enthalten sind, durch ein Produkt von *n* Perioden des Grundrahmens und der Größe *L* eines Unterkanals erhalten wird;

wobei *i* für das *i*-te zu übertragende drahtlose Schema steht, $i \geq 1$;

(4) für jedes der mehreren drahtlosen Schemata Konfigurieren der Anzahl $S_i$ von in einer Verbindung zu übertragenden Trägersektoren und der zu belegenden Unterkanäle, wobei eine Summe von Produkten der Anzahl der belegten Unterkanäle und der Anzahl $S_i$ der Trägersektoren für jedes der mehreren drahtlosen Schemata, die in dem Grundrahmen übertragen werden, nicht größer als die Gesamtanzahl *M* der Unterkanäle ist, die in dem Grundrahmen enthalten sind (203); und

(5) Abbilden von IQ-Daten von mindestens einem der mehreren drahtlosen Schemata auf die Unterkanäle zur Übertragung (204).

**2.** Verfahren nach Anspruch 1, wobei im Schritt (1)(201) die Größe jeder der Unterkanäle 16 Bit ist; und

wenn eine Übertragungsgeschwindigkeit zwischen der Basisbandeinheit und der entfernten Funkeinheit 614,4 Mbps ist, die Anzahl *M* der Unterkanäle 7 ist;

wenn eine Übertragungsgeschwindigkeit zwischen der Basisbandeinheit und der entfernten Funkeinheit 1228,8 Mbps ist, die Anzahl *M* der Unterkanäle 15 ist; und

wenn eine Übertragungsgeschwindigkeit zwischen der Basisbandeinheit und der entfernten Funkeinheit 2457,6 Mbps ist, die Anzahl *M* der Unterkanäle 30 ist.

**3.** Verfahren nach Anspruch 1, wobei im Schritt (2) eine kleinste gemeinsame Mehrfachperiode der Periode des Grundrahmens und der Periode des drahtlosen Schemas als die Abbildungsperiode verwendet wird; die Synchronisierungsperiode des Grundrahmens 10 ms ist und für das drahtlose GSM/EDGE-Schema die Periode des drahtlosen Schemas eine Periode eines Bursts ist und die Abbildungsperiode 7,5 ms ist; wobei eine kleinste gemeinsame Mehrfachperiode einer TDMA-Periode und der Synchronisierungsperiode des Grundrahmens als die Synchronisierungsperiode des drahtlosen Schemas verwendet wird, die 60 ms ist.

**4.** Verfahren nach Anspruch 1, wobei im Schritt (3)(202),

wenn das drahtlose Schema GSM/EDGE ist, IQ-Daten in jedem einzelnen Trägersektor einem Unterkanal in einem Grundrahmen entsprechen;

wenn das drahtlose Schema UMTS ist, IQ-Daten in jedem einzelnen Trägersektor zwei Unterkanälen in einem Grundrahmen entsprechen; und

wenn das drahtlose Schema TDSCDMA ist, IQ-Daten in jedem einzelnen Trägersektor zwei Unterkanälen in drei Grundrahmen entsprechen.

**5.** Verfahren nach Anspruch 3, wobei im Schritt (5)(204), wenn das drahtlose Schema GSM/EDGE ist, das Abbilden von IQ-Daten des drahtlosen Schemas auf die Unterkanäle die folgenden Schritte umfasst:

(5.1) Schreiben von GSM-EDGE-IQ-Daten in die Unterkanäle und Schreiben von mindestens einem GSM/EDGE-Unterkanal in den Grundrahmen, wobei jeder Unterkanal einem Grundrahmen entspricht;

(5.2) Kombinieren einer Anzahl von erzeugten Grundrahmen zu Segmenten, wobei IQ-Daten in jedem Segment IQ-Daten in einem GSM/EDGE-Burst sind;

(5.3) Kombinieren aller 13 erzeugten Segmente zu einer Abbildungsperiode und aller 8 Abbildungsperioden zu einer Synchronisierungsperiode und Senden und Empfangen von Rahmendaten von mehreren erzeugten Synchronisierungsperioden über eine Schnittstelle zwischen der Basisbandeinheit und der entfernten Funkeinheit mit einem Synchronisierungstakt der Daten von 60 ms.

6. Verfahren nach Anspruch 5, wobei das Segment zwei Typen umfasst: Segment A und Segment B; wobei das Segment A 2215 Grundrahmen enthält und das Segment B 2216 Grundrahmen enthält.

7. Verfahren nach Anspruch 6, wobei in jeder Abbildungsperiode eine Anordnung des Segments A und des Segments B AABABAABABAAB ist.

8. Verfahren nach Anspruch 5, wobei das Segment Funktionsbereichsblöcke eines Flag-Blocks, eines Rahmenanzahl-Blocks, eines GSM/EDGE-IQ-Blocks, eines erweiterten IQ-Blocks und eines ungenutzten Blocks umfasst; wobei der Flag-Block 4 Grundrahmen enthält, der Rahmenanzahl-Block 2 Grundrahmen enthält, der GSM/EDGE-IQ-Block 2184 Grundrahmen enthält und der ungenutzte Block 4 oder 3 Grundrahmen enthält.

9. Verfahren nach Anspruch 5, weiter umfassend:

im Schritt (5.1), wenn mindestens ein GSM/EDGE-Unterkanal in den Grundrahmen geschrieben wird, weiteres Schreiben von IQ-Daten von mindestens einem UMTS-Kanal in den Grundrahmen und/oder Schreiben von IQ-Daten von mindestens einem TDSCDMA-Chip in den Grundrahmen.

## Revendications

1. Procédé pour la transmission de données IQ d'une pluralité de schémas sans fil entre une unité de bande de base et un émetteur radio à distance, **caractérisé en ce que** le procédé comprend les étapes de :

(1) division équitable d'une zone de données IQ d'une trame de base en M sous-canaux (201), une taille de chaque sous-canal étant L et une capacité totale de la zone de de données IQ de la trame de base étant Q, Q = M $\times$ L :
(2) utilisation d'une période du plus petit commun multiple d'une période de la trame de base et d'une période d'un schéma sans fil en tant que période de mappage, la période de mappage étant n fois la période de la trame de base et m fois la période du schéma sans fil, m et n étant des nombres entiers positifs ; et utilisation d'une période de commun multiple de la période du schéma sans fil et d'une période de synchronisation de la trame de base en tant que période de synchronisation du schéma sans fil ;
(3) calcul du nombre Ni de sous-canaux occupés par les données IQ dans un seul secteur porteur du schéma sans fil dans chaque trame de base (202) ;
la quantité de données IQ contenues dans une période du schéma sans fil étant W, et Ni étant un résultat de l'arrondissement d'un quotient obtenu en divisant une quantité totale de données IQ contenues dans m périodes du schéma sans fil par un produit de n périodes de la trame de base et la taille L d'un sous-canal ;
où i représente le i$^e$ schéma sans fil à transmettre, i $\geq$ 1 ;
(4) pour chacun de la pluralité de schémas sans fil, la configuration du nombre Si de secteurs porteurs à transmettre dans une liaison et les sous-canaux à occuper, une somme de produits du nombre des sous-canaux occupés et du nombre Si des secteurs porteurs pour chacun de la pluralité de schémas sans fil transmis dans la trame de base n'étant pas supérieure au nombre total M des sous-canaux contenus dans la trame de base (203) ; et
(5) mappage des données IQ d'au moins un de la pluralité de schémas sans fil vers les sous-canaux pour une transmission (204).

2. Procédé selon la revendication 1, dans lequel à l'étape (1) (201), la taille de chacun des sous-canaux est de 16 bits ; et si une vitesse de la transmission entre l'unité de bande de base et l'émetteur radio à distance est 614,4 Mbps, le nombre M de sous-canaux est 7 ;
si la vitesse de la transmission entre l'unité de bande de base et l'émetteur radio à distance est 1 228,8 Mbps, le nombre M de sous-canaux est 15 ; et
si la vitesse de la transmission entre l'unité de bande de base et l'émetteur radio à distance est 2 457,6 Mbps, le nombre M de sous-canaux est 30.

3. Procédé selon la revendication 1, dans lequel à l'étape (2), une période du plus petit commun multiple de la période de la trame de base et de la période du schéma sans fil est utilisée comme période de mappage ; la période de synchronisation de la trame de base est 10 ms, et pour le schéma sans fil de GSM/EDGE, la période du schéma sans fil est une période de rafale, et la période de mappage est 7,5 ms ; une période du plus petit commun multiple d'une période de TDMA et de la période de synchronisation de la trame de base est utilisée comme période de synchronisation du schéma sans fil, qui est 60 ms.

4. Procédé selon la revendication 1, dans lequel à l'étape (3) (202),
si le schéma sans fil est GSM/EDGE, les données IQ dans chaque secteur porteur unique correspondent à un sous-canal dans une trame de base ;
si le schéma sans fil est UMTS, les données IQ dans chaque secteur porteur unique correspondent à deux sous-canaux dans une trame de base ; et
si le schéma sans fil est TDSCDMA, les données IQ dans chaque secteur porteur unique correspondent à deux sous-canaux dans trois trames de base.

5. Procédé selon la revendication 3, dans lequel à l'étape (5) (204), si le schéma sans fil est GSM/EDGE, le mappage des données IQ du schéma sans fil pour les sous-canaux comprend les étapes :

   (5.1) d'écriture des données IQ de GSM/EDGE dans les sous-canaux, et d'écriture d'au moins un sous-canal de GSM/EDGE dans la trame de base, chaque sous-canal correspondant à une trame de base ;
   (5.2) de combinaison d'un nombre de trames de base générées en segments, les données IQ dans chaque segment étant des données IQ dans une rafale de GSM/EDGE ; et
   (5.3) de combinaison de chaque ensemble de 13 segments générés dans une période de mappage et de chaque ensemble de 8 périodes de mappage en une période de synchronisation, et d'envoi ou de réception de données de trames d'une pluralité de périodes de synchronisation générées via une interface entre l'unité de bande de base et l'émetteur radio à distance avec une horloge de synchronisation de 60 ms des données.

6. Procédé selon la revendication 5, dans lequel le segment comprend deux types : le segment A et le segment B ; le segment A contient 2 215 trames de base, et le segment B contient 2 216 trames de base.

7. Procédé selon la revendication 6, dans lequel dans chaque période de mappage, un agencement du segment A et du segment B est AABABAABABAAB.

8. Procédé selon la revendication 5, dans lequel le segment comprend des blocs de domaine fonctionnels d'un bloc de fanion, un bloc de nombre de trames, un bloc IQ GSM/EDGE, un bloc IQ étendu et un bloc inutilisé ; le bloc de fanion contient 4 trames de base, le bloc de nombre de trames contient deux trames de base, le bloc IQ GSM/EDGE contient 2 184 trames de base et le bloc inutilisé contient 4 ou 3 trames de base.

9. Procédé selon la revendication 5, comprenant en outre :

   à l'étape (5.1), lors de l'écriture d'au moins un sous-canal de GSM/EDGE dans la trame de base, l'écriture supplémentaire de données IQ d'au moins un canal d'UMTS dans la trame de base et/ou l'écriture de données IQ d'au moins un élément de TDSCSDMA dans la trame de base.

FIG. 1

201

Dividing an IQ data area of a basic frame into a number of sub-channels

202

Determining a mapping period for mapping IQ data of a wireless scheme to the basic frame and a synchronization period of the wireless scheme, and calculating the number $N_i$ of sub-channels occupied by IQ data in a single carrier sector of the wireless scheme in each basic frame

203

For each wireless scheme, configuring the number $S_i$ of carrier sectors to be transmitted in the link and sub-channels to be occupied

204

Mapping IQ data of at least one wireless scheme to the sub-channels for transmission

FIG. 2

Sub-channel  0 1 2  ······      ······    M-1

Control word

M*L bits

FIG. 3

W = 0, 1, 2, 3, 4, 5, 6, 7, 8, 9, 10, 11, 12, 13, 14, 15

1 chip = 1/3.84MHz

B=0: A
B=1: B
... C
Y = 0  D
E
F
G
H
A
B
C
Y = 1  D
E
F
G
B=15: H

BYTE #Z.X.0

BYTE #Z.X.1

IQ
Data block

Time

Control word   d

15*16 bits

FIG. 4

16

Sub-channel 0 1 2 3 4 5 6 7 8 9 10 11 12 13 14

FIG. 5

FIG. 6

**FIG. 7**

**FIG. 8**

Data space D0 in a basic frame BFn

| | 0 | 1 | 2 | 3 | 4 | 5 | 6 | 7 |
|---|---|---|---|---|---|---|---|---|
| | $I_0$ | $I_8$ | $I_0$ | $I_8$ | $I_0$ | $I_8$ | $I_0$ | $I_8$ |
| | $Q_0$ | $Q_8$ | $Q_0$ | $Q_8$ | $Q_0$ | $Q_8$ | $Q_0$ | $Q_8$ |
| | $I_1$ | $I_9$ | $I_1$ | $I_9$ | $I_1$ | $I_9$ | $I_1$ | $I_9$ |
| | $Q_1$ | $Q_9$ | $Q_1$ | $Q_9$ | $Q_1$ | $Q_9$ | $Q_1$ | $Q_9$ |
| | $I_2$ | $I_{10}$ | $I_2$ | $I_{10}$ | $I_2$ | $I_{10}$ | $I_2$ | $I_{10}$ |
| | $Q_2$ | $Q_{10}$ | $Q_2$ | $Q_{10}$ | $Q_2$ | $Q_{10}$ | $Q_2$ | $Q_{10}$ |
| | $I_3$ | $I_{11}$ | $I_3$ | $I_{11}$ | $I_3$ | $I_{11}$ | $I_3$ | $I_{11}$ |
| | $Q_3$ | $Q_{11}$ | $Q_3$ | $Q_{11}$ | $Q_3$ | $Q_{11}$ | $Q_3$ | $Q_{11}$ |
| | $I_4$ | $I_{12}$ | $I_4$ | $I_{12}$ | $I_4$ | $I_{12}$ | $I_4$ | $I_{12}$ |
| | $Q_4$ | $Q_{12}$ | $Q_4$ | $Q_{12}$ | $Q_4$ | $Q_{12}$ | $Q_4$ | $Q_{12}$ |
| | $I_5$ | $I_{13}$ | $I_5$ | $I_{13}$ | $I_5$ | $I_{13}$ | $I_5$ | $I_{13}$ |
| | $Q_5$ | $Q_{13}$ | $Q_5$ | $Q_{13}$ | $Q_5$ | $Q_{13}$ | $Q_5$ | $Q_{13}$ |
| | $I_6$ | $I_{14}$ | $I_6$ | $I_{14}$ | $I_6$ | $I_{14}$ | $I_6$ | $I_{14}$ |
| | $Q_6$ | $Q_{14}$ | $Q_6$ | $Q_{14}$ | $Q_6$ | $Q_{14}$ | $Q_6$ | $Q_{14}$ |
| | $I_7$ | $I_{15}$ | $I_7$ | $I_{15}$ | $I_7$ | $I_{15}$ | $I_7$ | $I_{15}$ |
| | $Q_7$ | $Q_{15}$ | $Q_7$ | $Q_{15}$ | $Q_7$ | $Q_{15}$ | $Q_7$ | $Q_{15}$ |

16 bits

Main set | Diversity | Main set | Diversity

1st Sampling | 2nd Sampling

Symbol (128bits)

## FIG. 9

GSM/EDGE carrier | UTMS carrier

Carrier number

$Y=0$ : A B C D E F G H

0 1 2 3 4 5 6 7 8 U0 U1 U2

$Y=1$ : A B C D E F G H

Control word | 15*16 bits

## FIG. 10

Control word

15*16 bits

IQ data of GSM/EDGE and TDSCDMA is transmitted mixedly in 3 basic frames

## FIG. 11

Control word

15*16 bits

IQ data of GSM/EDGE, UMTS and TDSCDMA is transmitted mixedly in 3 basic frames

## FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1742494 A1